# EUROPEAN PATENT APPLICATION

(11) **EP 4 462 578 A1**
(43) Date of publication of application: **13.11.2024**
(21) Application number: 22923440.6
(22) Date of filing: 29.11.2022
(51) Int. Cl.: H01M 50/317

(54) **EXPLOSION-PROOF VALVE PATCH FOR BATTERY, END COVER ASSEMBLY, BATTERY, AND ELECTRIC DEVICE**

(30) Priority: 27.01.2022 CN 202220227530 U
(71) Applicant: Contemporary Amperex Technology Co., Limited, Fujian 352100 (CN)
(72) Inventor: CHEN, Shengwang, NINGDE CITY, Fujian 352100 (CN); ZHOU, Wenlin, NINGDE CITY, Fujian 352100 (CN); GUO, Zhijun, NINGDE CITY, Fujian 352100 (CN)
(74) Representative: Gong, Jinping
(86) International application number: PCT/CN2022/134913
(87) International publication number: WO 2023/142648

(57) **Abstract**

This disclosure provides an anti-explosion valve patch for battery, an end cover assembly, a battery, and an electric apparatus. The anti-explosion valve patch has an exhaust hole and includes: a patch body; and a closed convex ring disposed on the patch body, protruding from a surface of the patch body to a same side, where the exhaust hole is located on the closed convex ring or in a region enclosed by the closed convex ring. The anti-explosion valve patch of this disclosure is conducive to maintaining the protection capability of the anti-explosion valve. The end cover assembly of this disclosure includes such anti-explosion valve patch. The battery of this disclosure includes such end cover assembly. The electric apparatus of this disclosure includes such battery.

## Description

### CROSS-REFERENCE TO RELATED APPLICATIONS

This application claims priority to Chinese Patent Application No. 202220227530.X, filed on January 27, 2022 and entitled "ANTI-EXPLOSION VALVE PATCH FOR BATTERY, END COVER ASSEMBLY, BATTERY, AND ELECTRIC APPARATUS", which is incorporated herein by reference in its entirety.

### TECHNICAL FIELD

This disclosure relates to the field of battery technologies, and in particular, to an anti-explosion valve patch for battery, an end cover assembly, a battery, and an electric apparatus.

### BACKGROUND

At present, the safety of secondary batteries attracts increasing attention. How to ensure no safety incident throughout the entire life cycle of a battery has become one of the common concerns in the battery industry. To protect the anti-explosion valve of the battery during use, an anti-explosion valve patch is attached to the top of the anti-explosion valve.

### SUMMARY

An objective of this disclosure is to provide an anti-explosion valve patch for battery, an end cover assembly, a battery, and an electric apparatus, so as to improve the protection capability of the anti-explosion valve.

A first aspect of this disclosure provides an anti-explosion valve patch for battery. The anti-explosion valve patch has an exhaust hole. The anti-explosion valve patch includes a patch body; and a closed convex ring disposed on the patch body, protruding from a surface of the patch body to a same side, where the exhaust hole is located on the closed convex ring or in a region enclosed by the closed convex ring.

In the anti-explosion valve patch of this disclosure, because the closed convex ring is arranged and the exhaust hole is located on the closed convex ring or in the region enclosed by the closed convex ring, the closed convex ring can block a liquid around its periphery, such as an electrolyte, so as to prevent the electrolyte from flowing into the exhaust hole and into a space between the anti-explosion valve patch and the anti-explosion valve via the exhaust hole, thus preventing the electrolyte from corroding the anti-explosion valve. In addition, the closed convex ring has a strong anti-deformation capability, which is conducive to maintaining the shape of the closed convex ring, thus maintaining the protection capability for the anti-explosion valve.

In the anti-explosion valve patch of some embodiments, the closed convex ring and the patch body are integrally processed from a same sheet material. Such arrangement is conducive to processing and molding of the anti-explosion valve patch, allowing for a high processing efficiency.

In the anti-explosion valve patch of some embodiments, a projection of the closed convex ring on the patch body includes at least one closed contour line, each closed contour line being in a shape of a curve, a polygon, or a combination of a curve and a straight line. The closed convex ring can be arranged in a variety of shapes, to facilitate selection of a proper shape for the closed convex ring based on material and thickness of the anti-explosion valve patch, shapes and positions of components around the anti-explosion valve patch, and the like, thus improving the protection capability and adaptability of the anti-explosion valve patch.

In the anti-explosion valve patch of some embodiments, a cross section of the closed convex ring perpendicular to an extension direction of the closed convex ring is in a shape of a curve, a polygon, or a combination of a curve and a straight line. The cross section of the closed convex ring can be arranged in a variety of shapes, to facilitate selection of a proper shape for the cross section of the closed convex ring based on material and thickness of the anti-explosion valve patch, shapes and positions of components around the anti-explosion valve patch, and the like, thus improving the protection capability and adaptability of the anti-explosion valve patch.

In the anti-explosion valve patch of some embodiments, the anti-explosion valve patch further includes a reinforcing rib close to the closed convex ring for reinforcing strength of the closed convex ring, where the reinforcing rib is disposed on the patch body, protruding from the surface of the patch body. The arrangement of the reinforcing rib is conducive to further improving the anti-deformation capability of the closed convex ring, thus maintaining the shape of the closed convex ring and the protection capability for the anti-explosion valve.

In the anti-explosion valve patch of some embodiments, the reinforcing rib and the patch body are integrally processed from a same sheet material. Such arrangement is conducive to processing and molding of the anti-explosion valve patch, allowing for a high processing efficiency.

In the anti-explosion valve patch of some embodiments, the reinforcing rib includes an external reinforcing rib segment located outside the region enclosed by the closed convex ring; and/or an internal reinforcing rib segment located in the region enclosed by the closed convex ring. The reinforcing rib includes the external reinforcing rib segment and/or the internal reinforcing rib segment, both of which can improve the anti-deformation capability of the closed convex ring. Not limited by the size of the region enclosed by the closed convex ring, the external reinforcing rib segment can be arranged more flexibly. Without occupying the area outside the closed convex ring, the internal reinforcing rib segment better avoids other components of the battery and the end cover assembly during assembly and use.

In the anti-explosion valve patch of some embodiments, the reinforcing rib includes the internal reinforcing rib segment, where the exhaust hole avoids the internal reinforcing rib segment; or the exhaust hole is located in the internal reinforcing rib segment. Such arrangement takes into account both the positions of the reinforcing rib and the exhaust hole, allowing for more flexible arrangement of the reinforcing rib and the exhaust hole.

In the anti-explosion valve patch of some embodiments, the reinforcing rib includes: a straight reinforcing rib segment, where the straight reinforcing rib segment extends along a straight line; and/or a curved reinforcing rib segment, where the curved reinforcing rib segment extends along a curve. Such arrangement is conducive to flexibly arranging the reinforcing rib based on the space near the closed convex ring.

In the anti-explosion valve patch of some embodiments, the reinforcing rib includes: a same-side reinforcing rib segment in a same direction as the closed convex ring protruding from the surface of the patch body; and/or an opposite-side reinforcing rib segment in an opposite direction as the closed convex ring protruding from the surface of the patch body. Such arrangement is conducive to flexibly arranging the reinforcing rib based on the space near the closed convex ring.

In the anti-explosion valve patch of some embodiments, the reinforcing rib includes: a connecting reinforcing rib segment connected to the closed convex ring; and/or a spaced reinforcing rib segment spaced apart from the closed convex ring. Such arrangement is conducive to flexibly arranging the reinforcing rib based on the space near the closed convex ring.

A second aspect of this disclosure provides an end cover assembly including: an end plate; an anti-explosion valve disposed on the end plate; and the anti-explosion valve patch according to the embodiments of this disclosure, where the anti-explosion valve patch covers the anti-explosion valve, and the closed convex ring of the anti-explosion valve patch protrudes from the surface of the patch body towards a side away from the anti-explosion valve. The end cover assembly of this disclosure has the same advantages as the anti-explosion valve patch of this disclosure.

A third aspect of this disclosure provides a battery including the end cover assembly according to the second aspect of this disclosure. The battery of this disclosure has the same advantages as the end cover assembly and anti-explosion valve patch of this disclosure.

A fourth aspect of this disclosure provides an electric apparatus including the battery according to the third aspect of this disclosure, where the battery supplies electric energy to the electric apparatus. The electric apparatus of this disclosure has the same advantages as the battery, end cover assembly, and anti-explosion valve patch of the embodiments of this disclosure.

Other features and advantages of this disclosure become apparent from the following detailed description of exemplary embodiments of this disclosure with reference to the accompanying drawings.

### BRIEF DESCRIPTION OF DRAWINGS

The accompanying drawings described herein are intended for better understanding of this disclosure and constitute a part of this application. Illustrative embodiments and descriptions thereof in this disclosure are intended to interpret this disclosure without constituting any inappropriate limitation on this disclosure. In the accompanying drawings:
FIG. 1 is a schematic structural diagram of an electric apparatus according to an embodiment of this disclosure.
FIG. 2 is a schematic structural exploded view of a battery according to an embodiment of this disclosure.
FIG. 3 is a schematic structural exploded view of an end cover assembly according to an embodiment of this disclosure.
FIG. 4 is a schematic structural top view of an end cover assembly shown in FIG. 3.
FIG. 5 is a schematic structural diagram of FIG. 4 along direction T-T.
FIG. 6 is an enlarged schematic structural view of part U in FIG. 5.
FIG. 7 is a schematic structural diagram of an anti-explosion valve patch according to an embodiment of this disclosure.
FIG. 8 is a schematic structural diagram of an anti-explosion valve patch according to an embodiment of this disclosure.

### DETAILED DESCRIPTION OF EMBODIMENTS

The following clearly and completely describes the technical solutions in the embodiments of this disclosure with reference to the accompanying drawings in the embodiments of this disclosure. Apparently, the described embodiments are only some rather than all of the embodiments of this disclosure. The following description of at least one exemplary embodiment is merely illustrative and definitely is not construed as any limitation on this disclosure or on use of this disclosure. All other embodiments obtained by persons of ordinary skill in the art based on the embodiments of this disclosure without creative efforts shall fall within the protection scope of this disclosure.

Unless otherwise specified, relative arrangements of parts and steps, numerical expressions, and numerical values set forth in these embodiments do not constitute a limitation on the scope of this disclosure. Moreover, it should be understood that, for ease of description, sizes of various parts shown in the accompanying drawings are not drawn to scale. The technologies, methods, and devices known to those of ordinary skill in the related art may not be discussed in detail, but where appropriate, the technologies, methods, and devices should be regarded as being authorized as a part of the specification. In all examples shown and discussed herein, any specified value should be interpreted as merely illustrative, rather than restrictive. Therefore, other examples of the exemplary embodiments may have different values. It should be noted that similar reference signs and letters indicate similar items in the following drawings, and therefore once an item is defined in one drawing, it does not need to be further discussed in the subsequent drawings.

In the descriptions disclosed herein, it should be understood that terms such as "first" and "second" are used to limit components for the only purpose of distinguishing between corresponding components. Unless otherwise stated, these terms do not carry any special significance, and therefore should not be interpreted as limitations on the protection scope of this disclosure.

In the description of this disclosure, it should be understood that directional terms such as "front, back, top, bottom, left, right," "transverse, vertical, perpendicular, horizontal," and "top, bottom" generally refer to the orientations or positional relationships based on those in the accompanying drawings. These terms are used merely for conveniently describing this disclosure and simplifying the description. Unless stated otherwise, these directional terms do not indicate or imply that a referred apparatus or element must have a specific orientation or be constructed and operated in a specific orientation. Therefore, they should not be understood as limitations on the protection scope of this disclosure. The directional terms "inner" and "outer" refer to the inside and outside relative to the contours of the parts themselves.

The following clearly and completely describes the technical solutions in the embodiments of this disclosure with reference to the accompanying drawings in the embodiments of this disclosure. Apparently, the described embodiments are only some rather than all of the embodiments of this disclosure. The following description of at least one exemplary embodiment is merely illustrative and definitely is not construed as any limitation on this disclosure or on use of this disclosure. All other embodiments obtained by persons of ordinary skill in the art based on the embodiments of this disclosure without creative efforts shall fall within the protection scope of this disclosure.

Unless otherwise specified, relative arrangements of parts and steps, numerical expressions, and numerical values set forth in these embodiments do not constitute a limitation on the scope of this disclosure. Moreover, it should be understood that, for ease of description, sizes of various parts shown in the accompanying drawings are not drawn to scale. The technologies, methods, and devices known to those of ordinary skill in the related art may not be discussed in detail, but where appropriate, the technologies, methods, and devices should be regarded as being authorized as a part of the specification. In all examples shown and discussed herein, any specified value should be interpreted as merely illustrative, rather than restrictive. Therefore, other examples of the exemplary embodiments may have different values. It should be noted that similar reference signs and letters indicate similar items in the following drawings, and therefore once an item is defined in one drawing, it does not need to be further discussed in the subsequent drawings.

In the descriptions disclosed herein, it should be understood that terms such as "first" and "second" are used to limit components for the only purpose of distinguishing between corresponding components. Unless otherwise stated, these terms do not carry any special significance, and therefore should not be interpreted as limitations on the protection scope of this disclosure.

In the description of this disclosure, it should be understood that directional terms such as "front, back, top, bottom, left, right," "transverse, vertical, perpendicular, horizontal," and "top, bottom" generally refer to the orientations or positional relationships based on those in the accompanying drawings. These terms are used merely for conveniently describing this disclosure and simplifying the description. Unless stated otherwise, these directional terms do not indicate or imply that a referred apparatus or element must have a specific orientation or be constructed and operated in a specific orientation. Therefore, they should not be understood as limitations on the protection scope of this disclosure. The directional terms "inner" and "outer" refer to the inside and outside relative to the contours of the parts themselves.

An anti-explosion valve patch for battery according to embodiments of this disclosure is a film structure attached to the top of an anti-explosion valve of a battery cell to balance the difference of pressures outside and inside the anti-explosion valve, preventing electrolyte from infiltrating the anti-explosion valve.

Because the anti-explosion valve patch provides a certain sealing effect, an anti-explosion valve with air tightness defect may be mistakenly judged as having good air tightness during air tightness detection. To this end, an exhaust hole can be disposed on the anti-explosion valve patch, so as to accurately detect the air tightness performance of the anti-explosion valve during air tightness detection. However, due to arrangement of the exhaust hole, if there is liquid on an end cover of the battery, for example, there is electrolyte due to electrolyte overflow or the like, the electrolyte may flow onto the anti-explosion valve patch and enter the space between the anti-explosion valve patch and the anti-explosion valve through the exhaust hole, thus compromising the protection capability provided by the anti-explosion valve patch for the anti-explosion valve. Thus, to prevent the liquid such as the electrolyte from flowing to the exhaust hole, a boss protruding along a direction leaving the anti-explosion valve can be disposed on the anti-explosion valve patch and the exhaust hole is disposed in the boss, so as to use the boss to block the electrolyte flowing to the exhaust hole.

However, during implementation of this application, the inventors have found that the anti-explosion valve patch itself has a deformation capability to prevent adverse effect on related structures of the battery. In the technical solution of providing the boss on the anti-explosion valve patch and the exhaust hole in the boss, the boss is likely to deform, and the deformed boss can hardly block the electrolyte from flowing to the exhaust hole, making it difficult for the boss to play its role and affecting the protection effect of the anti-explosion valve patch.

To resolve the above-mentioned technical problems, the embodiments of this disclosure provide an anti-explosion valve patch for battery, an end cover assembly, a battery, and an electric apparatus.

The electric apparatus of the embodiments of this disclosure includes the battery of the embodiments of this disclosure, where the battery is configured to supply electric energy to the electric apparatus. The battery of the embodiments of this disclosure includes the end cover assembly of the embodiments of this disclosure. The end cover assembly of the embodiments of this disclosure includes the anti-explosion valve patch of the embodiments of this disclosure.

The electric apparatus may be mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

The battery of the embodiments of this disclosure is a single physical module that includes one or more battery cells for providing a higher voltage and capacity. For example, the battery may include a battery module, a battery pack, or the like. A battery typically includes a box configured to enclose one or more battery cells. The box can prevent liquids or other foreign matter from affecting charging or discharging of the battery cell.

The battery takes three forms: a battery cell, a battery module, and a battery pack. The battery cell is a smallest unit that constitutes the battery module or the battery pack.

A plurality of battery cells may be connected in series and/or in parallel through electrode terminals for various application scenarios, for example, some high-power application scenarios such as electric vehicles.

The battery module is formed by electrically connecting a specific quantity of battery cells and putting the battery cells into a frame to protect the battery cells from external impact, heat, vibration, and the like. With the development of technologies, the battery module may be omitted, that is, the battery pack is directly formed using battery cells.

The battery pack is a final state of a battery system loaded into a high-power electric apparatus such as an electric vehicle. Typically, a battery pack includes a box configured to package one or more battery cells. The box can prevent liquids or other foreign matter from affecting charging or discharging of the battery cell. The box typically consists of a cover and a box shell. Most existing battery packs are formed by assembling various control and protection systems such as a battery management system (Battery Management System, BMS) and a thermal management part on one or more battery modules.

The battery mentioned in the embodiments of this disclosure includes a battery cell, a battery module, or a battery pack.

In the embodiments of this disclosure, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this disclosure. The battery cell may be cylindrical, flat, rectangular, or of other shapes, which is not limited in the embodiments of this disclosure. The battery cells are typically divided into three types by packaging method: a cylinder battery cell, a prismatic battery cell, and a pouch battery cell, and this is also not limited in the embodiments of this disclosure.

The battery cell mainly includes a cell assembly, a housing, and an end cover assembly, and the cell assembly is packaged in the housing using an end cover of the end cover assembly.

The cell assembly is a part in which electrochemical reactions take place in the battery cell. There may be one or more cell assemblies in the housing. The cell assembly is mainly formed by winding or stacking a positive electrode plate and a negative electrode plate, and a separator is typically disposed between the positive electrode plate and the negative electrode plate. Parts of the positive electrode plate and the negative electrode plate with active substances constitute a body portion of the cell assembly, while parts of the positive electrode plate and the negative electrode plate without active substances respectively constitute tabs. A positive electrode tab and a negative electrode tab may both be located at one end of the body portion or be located at two ends of the body portion respectively. During charge and discharge of the battery, a positive electrode active substance and a negative electrode active substance react with an electrolyte, and the tabs are connected to the electrode terminals to form a current loop. The cell assembly may be a wound structure or a stacked structure, which is not limited in the embodiments of this disclosure.

The electrode assembly may be a wound structure. A strip-shaped first electrode plate, separator, and second electrode plate are stacked sequentially and wound for more than two turns to form an electrode assembly, and the electrode assembly may be flat. When manufactured, the electrode assembly may be wound directly to be flat, roughly forming a hexahedral structure, or wound into a hollow cylindrical structure and then flattened to be flat. A flat surface is roughly parallel to a winding axis and is an outer surface with the largest area. The flat surface may be a relatively flat surface rather than a completely flat surface as required.

The electrode assembly may alternatively be a stacked structure, that is, the electrode assembly includes multiple first electrode plates and multiple second electrode plates, and a separator is sandwiched between the first electrode plate and the second electrode plate. The first electrode plates and the second electrode plates are stacked.

The housing is an assembly configured to form the internal environment of the battery cell together with the end cover, where the formed internal environment may be used to contain the cell assembly, electrolyte, and other parts. The housing and the end cover may be independent parts, and an opening may be provided in the housing, so that the end cover can close the opening to form the internal environment of the battery cell. The housing may be of various shapes and sizes, such as a rectangular shape, a cylindrical shape, and a hexagonal prism shape. Specifically, the shape of the housing may be determined based on a specific shape and size of a cell assembly. The housing may be made of various materials, such as copper, iron, aluminum, stainless steel, aluminum alloy, plastic, or the like, which are not particularly limited in the embodiments of this disclosure.

The end cover is a part that covers an opening of the housing to isolate internal environment of the battery cell from external environment. The end cover may fit with the housing in shape so as to match the housing. Optionally, the end cover may be made of materials (for example, aluminum alloy) with given hardness and strength, so that the end cover is less likely to deform when subjected to extrusion and collision, enabling the battery cell to have higher structural strength and enhanced safety performance. The end cover may be provided with functional parts such as an electrode terminal. The electrode terminal may be configured to be electrically connected to the cell assembly for outputting or inputting electric energy of the battery cell. In some embodiments, the end cover may further be provided with a pressure relief mechanism configured to relieve internal pressure when the internal pressure or temperature in the battery cell reaches a threshold. The end cover may also be made of various materials, such as copper, iron, aluminum, stainless steel, aluminum alloy, plastic, or the like, which are not particularly limited in the embodiments of this disclosure.

The pressure relief mechanism is an element or part that is actuated when internal pressure or temperature of the battery cell reaches a predetermined threshold, so as to release the internal pressure or temperature. The threshold design varies with a design requirement. The threshold may depend on the material used for one or more of a positive electrode plate, a negative electrode plate, an electrolyte, and a separator in the battery cell. The pressure relief mechanism may serve as an anti-explosion valve. When the internal pressure or temperature of the battery cell reaches the predetermined threshold, the pressure relief mechanism enables an action or a weak structure provided in the pressure relief mechanism is destroyed, thereby forming the opening or a channel for relieving the internal pressure or temperature.

When the pressure relief mechanism is actuated, high-temperature and high-pressure substances inside the battery cell are discharged as emissions from an actuated site. In this way, the battery cell can discharge its pressure and temperature under controllable pressure or temperature, thereby avoiding more serious potential accidents.

As a commonly used pressure relief mechanism, the anti-explosion valve is typically disposed on the end cover of the battery cell, and the anti-explosion valve may be, for example, a portion of the flat surface of the end cover or welded to the flat surface of the end cover. For example, the anti-explosion valve may have an indentation, and depth of the indentation is smaller than thickness of the anti-explosion valve in regions other than the indentation, such that the anti-explosion valve is not penetrated. In a normal state, the anti-explosion valve is hermetically engaged with the end cover, and the end cover is connected to the housing at the opening of the housing to form a shell for accommodating the electrode assembly, and a space formed by the shell is sealed airtight. When too much gas is produced by the battery cell in the shell, and the gas expands and causes the pressure in the shell to rise beyond a preset value, the anti-explosion valve ruptures at the indentation, allowing for communication between the outside and the inside of the shell. The gas is released outward through the rupture of the anti-explosion valve, thus preventing explosion.

In some embodiments, an insulator may also be disposed on an inner side of the end cover. The insulator can be configured to isolate electrical connection parts in the housing from the end cover, reducing the risk of short circuit. For example, the insulator may be made of plastic, rubber, or the like.

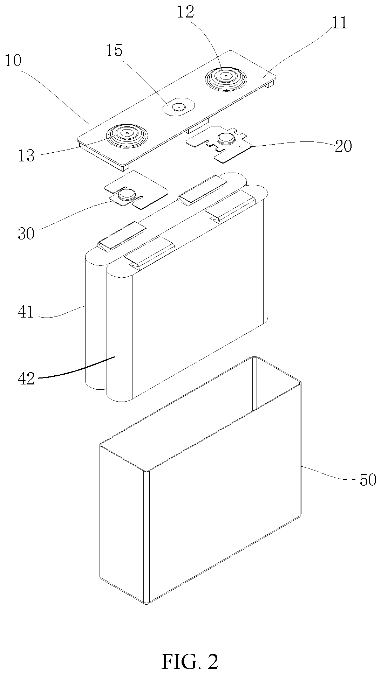

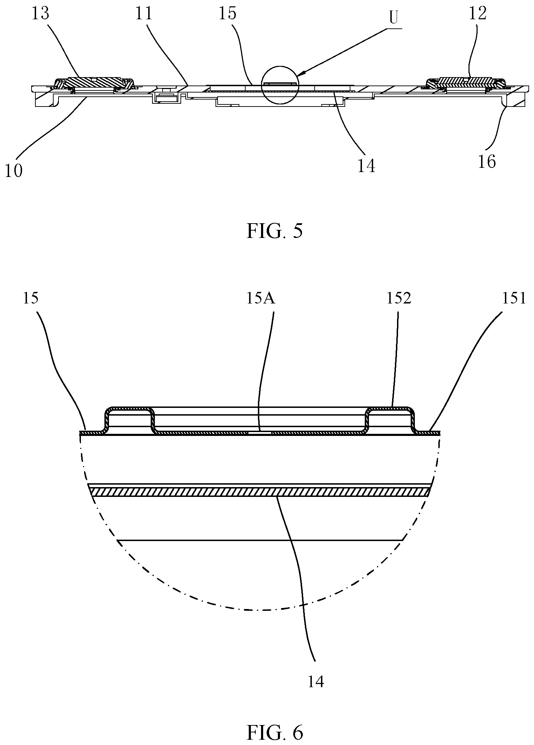

As shown in FIGs. 2 to 8, the anti-explosion valve patch 15 for battery in the embodiments of this disclosure has an exhaust hole 15A, and the anti-explosion valve patch 15 includes: a patch body 151; and a closed convex ring 152 disposed on the patch body 151, protruding from a surface of the patch body 151 to a same side. The exhaust hole 15A is located on the closed convex ring 152 or in a region enclosed by the closed convex ring 152.

In the anti-explosion valve patch 15 of the embodiments of this disclosure, because the closed convex ring 152 is arranged and the exhaust hole 15A is located on the closed convex ring 152 or in the region enclosed by the closed convex ring 152, the closed convex ring 152 can block a liquid around its periphery, such as an electrolyte, so as to prevent the electrolyte from flowing into the exhaust hole 15A and into a space between the anti-explosion valve patch 15 and the anti-explosion valve 14 via the exhaust hole 15A, thus preventing the electrolyte from corroding the anti-explosion valve. In addition, as compared with the related technology of arranging only the boss, under the same conditions such as the same material, thickness, or outer diameter, the closed convex ring 152 has a stronger anti-deformation capability than the boss, which is conducive to maintaining the shape of the closed convex ring 152, thus maintaining the protection capability for the anti-explosion valve 14. Arranging the exhaust hole 15A is intended to ensure that the anti-explosion valve patch 15 can protect the anti-explosion valve 14, while ensuring that the anti-explosion valve 14 is not misjudged due to existence of the anti-explosion valve patch 15 during the air tightness detection.

The anti-explosion valve patch 15 may be made of materials such as PP (Polypropylene, polypropylene), PC (polycarbonate, polycarbonate), PET (Polyethylene terephthalate, polyethylene terephthalate) with a thickness of, for example, 0.08 mm to 0.4 mm. The closed convex ring 152 exceeds the patch body 151 by a height of, for example, 0.2 mm to 1.2 mm. The shape and quantity of the exhaust hole 15A may be set based on requirements. For example, the exhaust hole is a circular hole with a diameter of 0.2 mm.

In the anti-explosion valve patch 15 of some embodiments, the closed convex ring 152 and the patch body 151 are integrally processed from a same sheet material. Such arrangement is conducive to processing and molding of the anti-explosion valve patch 15, allowing for a high processing efficiency. For example, the closed convex ring 152 of the anti-explosion valve patch 15 and the patch body 151 may be integrally formed through hot pressing.

In the anti-explosion valve patch 15 of some embodiments, a projection of the closed convex ring 152 on the patch body 151 includes at least one closed contour line, each closed contour line being in a shape of a curve, a polygon, or a combination of a curve and a straight line. The closed convex ring 152 can be arranged in a variety of shapes, to facilitate selection of a proper shape for the closed convex ring 152 based on material and thickness of the anti-explosion valve patch 15, shapes and positions of components around the anti-explosion valve patch 15, and the like, thus improving the protection capability and adaptability of the anti-explosion valve patch 15.

For example, for the closed convex ring 152 shown in FIGs. 2 to 8, due to presence of transition chamfers in its own structure and with the patch body 151, multiple closed contour lines are formed on the inner side and outer side of the top of the closed convex ring 152. The closed contour lines are all circular as shown in FIGs. 2 to 8.

In some embodiments not shown in the figures, the closed contour lines may all be of a curvilinear shape such as elliptical or plum-shaped; or may all be of a polygonal shape such as triangular, quadrilateral, or hexagonal; or may all be a shape combining curves and straight lines such as obround or rounded polygonal.

In addition, the multiple closed contour lines may be of the same shape, for example, being all circular. In an embodiment not shown in the figures, the multiple closed contour lines may be of different shapes. For example, the closed contour line on the outer side of the top of the closed convex ring may be polygonal, and the closed contour line on the inner side of the top of the closed convex ring may be circular.

In the anti-explosion valve patch 15 of some embodiments, a cross section of the closed convex ring 152 perpendicular to an extension direction of the closed convex ring is in a shape of a curve, a polygon, or a combination of a curve and a straight line. The cross section of the closed convex ring 152 can be arranged in a variety of shapes, to facilitate selection of a proper shape for the cross section of the closed convex ring 152 based on material and thickness of the anti-explosion valve patch 15, shapes and positions of components around the anti-explosion valve patch 15, and the like, thus improving the protection capability and adaptability of the anti-explosion valve patch 15.

The cross section of the closed convex ring may be of a shape combining straight line and curve, such as a polygon with curved chamfers in the embodiments shown in FIGs. 2 to 8. The cross section of the closed convex ring may alternatively be of a curvilinear shape, such as a circular arc or an elliptical arc. The cross section of the closed convex ring may alternatively be of a polygonal shape, such as a triangle or a trapezoid.

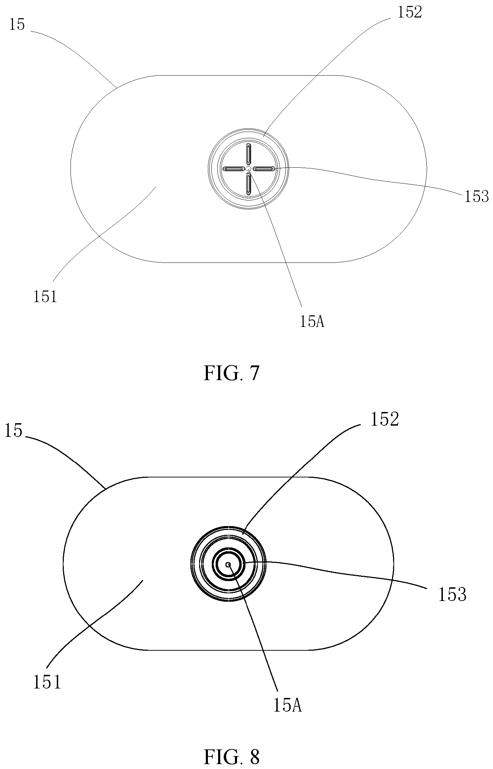

As shown in FIGs. 7 and 8, in the anti-explosion valve patch 15 of some embodiments, the anti-explosion valve patch 15 further includes a reinforcing rib 153 close to the closed convex ring 152 for reinforcing strength of the closed convex ring 152, where the reinforcing rib 153 is disposed on the patch body 151, protruding from the surface of the patch body 151. The arrangement of the reinforcing rib 153 is conducive to further improving the anti-deformation capability of the closed convex ring 152, thus maintaining the shape of the closed convex ring 152 and the protection capability for the anti-explosion valve 14.

In the anti-explosion valve patch 15 of some embodiments, the reinforcing rib 153 and the patch body 151 are integrally processed from a same sheet material. Such arrangement is conducive to processing and molding of the anti-explosion valve patch 15, allowing for a high processing efficiency. For example, the closed convex ring 152 of the anti-explosion valve patch 15 may be integrally formed with the patch body 151 and the reinforcing rib 153 through hot pressing.

In the anti-explosion valve patch 15 of some embodiments, the reinforcing rib 153 includes: an external reinforcing rib segment located outside the region enclosed by the closed convex ring 152; and/or an internal reinforcing rib segment located in the region enclosed by the closed convex ring 152. The reinforcing rib 153 includes the external reinforcing rib segment and/or the internal reinforcing rib segment, which can improve the anti-deformation capability of the closed convex ring 152. Not limited by the size of the region enclosed by the closed convex ring 152, the external reinforcing rib segment can be arranged more flexibly. Without occupying the area outside the closed convex ring 152, the internal reinforcing rib segment better avoids other components of the battery and the end cover assembly 10 during assembly and use.

In the anti-explosion valve patch 15 of some embodiments, the reinforcing rib 153 includes the internal reinforcing rib segment, where the exhaust hole 15A avoids the internal reinforcing rib segment; or the exhaust hole 15A is located in the internal reinforcing rib segment. Such arrangement takes into account positions of both the reinforcing rib and the exhaust hole 15A, allowing for more flexible arrangement of the reinforcing rib and the exhaust hole 15A.

In the anti-explosion valve patch 15 of some embodiments, the reinforcing rib 153 includes a straight reinforcing rib segment; and/or a curved reinforcing rib segment. Such arrangement is conducive to flexibly arranging the reinforcing rib based on the space near the closed convex ring 152. For example, if multiple reinforcing ribs are circumferentially arranged between the closed convex ring 152 and the exhaust hole 15A, the multiple reinforcing ribs may be arranged in a linear pattern, for example, straight reinforcing ribs extending radially or straight reinforcing ribs at some radial angles; or the multiple reinforcing ribs may be arranged in a curved pattern, for example, curved reinforcing ribs or S-shaped reinforcing ribs. Similarly, multiple linear or curved reinforcing ribs may be also distributed circumferentially outside the closed convex ring 152.

In the anti-explosion valve patch 15 of some embodiments, the reinforcing rib 153 includes: a same-side reinforcing rib segment in a same direction as the closed convex ring 152 protruding from the surface of the patch body 151; and/or an opposite-side reinforcing rib segment in an opposite direction as the closed convex ring 152 protruding from the surface of the patch body 151. Such arrangement is conducive to flexibly arranging the reinforcing rib based on the space near the closed convex ring 152.

In the anti-explosion valve patch 15 of some embodiments, the reinforcing rib 153 includes: a connecting reinforcing rib segment connected to the closed convex ring 152; and/or a spaced reinforcing rib segment spaced apart from the closed convex ring 152. Such arrangement is conducive to flexibly arranging the reinforcing rib based on the space near the closed convex ring 152. For example, multiple rib segments of the reinforcing rib 153 in the anti-explosion valve patch 15 according to the embodiment shown in FIG. 7 are spaced reinforcing rib segments apart from the closed convex ring 152.

In the arrangement of the reinforcing ribs according to the foregoing embodiments, a same reinforcing rib may have multiple properties. For example, a same reinforcing rib may be an internal reinforcing rib segment, a curved reinforcing rib segment, an opposite-side reinforcing rib segment, and a spaced reinforcing rib segment at the same time.

The end cover assembly 10 of the embodiments of this disclosure includes: an end plate 11; an anti-explosion valve 14 disposed on the end plate 11; and an anti-explosion valve patch 15, being the anti-explosion valve patch 15 according to the foregoing embodiments of this disclosure. The anti-explosion valve patch 15 covers the anti-explosion valve 14, and the closed convex ring 152 of the anti-explosion valve patch 15 protrudes from the surface of the patch body 151 towards a side away from the anti-explosion valve 14. The end cover assembly 10 of the embodiments of this disclosure has the same advantages as the anti-explosion valve patch 15 of the embodiments of this disclosure.

The battery of the embodiments of this disclosure includes the end cover assembly 10 of the embodiments of this disclosure. The battery of the embodiments of this disclosure has the same advantages as the end cover assembly 10 and anti-explosion valve patch 15 of the embodiments of this disclosure.

The electric apparatus of the embodiments of this disclosure includes the battery of the embodiments of this disclosure, where the battery is configured to supply electric energy to the electric apparatus. The electric apparatus of the embodiments of this disclosure has the same advantages as the battery, end cover assembly 10, and anti-explosion valve patch 15 of the embodiments of this disclosure.

The anti-explosion valve patch for battery, the end cover assembly including the anti-explosion valve patch, the battery, and the electric device according to the embodiments of this disclosure are described in detail with reference to FIGs. 2 to 8. For the battery and the electric apparatus of the embodiments of this disclosure, refer to the foregoing description.

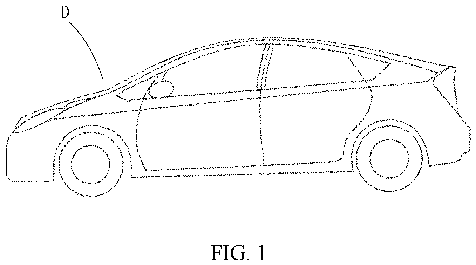

As shown in FIG. 1, the electric apparatus may be a vehicle D. The vehicle D includes a battery, and the battery is configured to supply electric energy to the vehicle. The vehicle is, for example, a new energy vehicle. The new energy vehicle may be a battery electric vehicle, a hybrid electric vehicle, an extended-range electric vehicle, or the like.

The battery of the embodiments of this disclosure includes a battery cell. As shown in FIG. 2, the battery cell includes an end cover assembly 10, a housing 50, a first cell assembly 41, a second cell assembly 42, a first connection piece 20, a second connection piece 30, and other functional parts. The first connection piece 20 connects positive electrode tabs of the cell assemblies 41 and 42 to a first electrode terminal 12 on an end cover 11 of the end cover assembly 10, and the second connection piece 30 connects negative electrode tabs of the cell assemblies 41 and 42 to a second electrode terminal 13 on the end cover 11 of the end cover assembly 10.

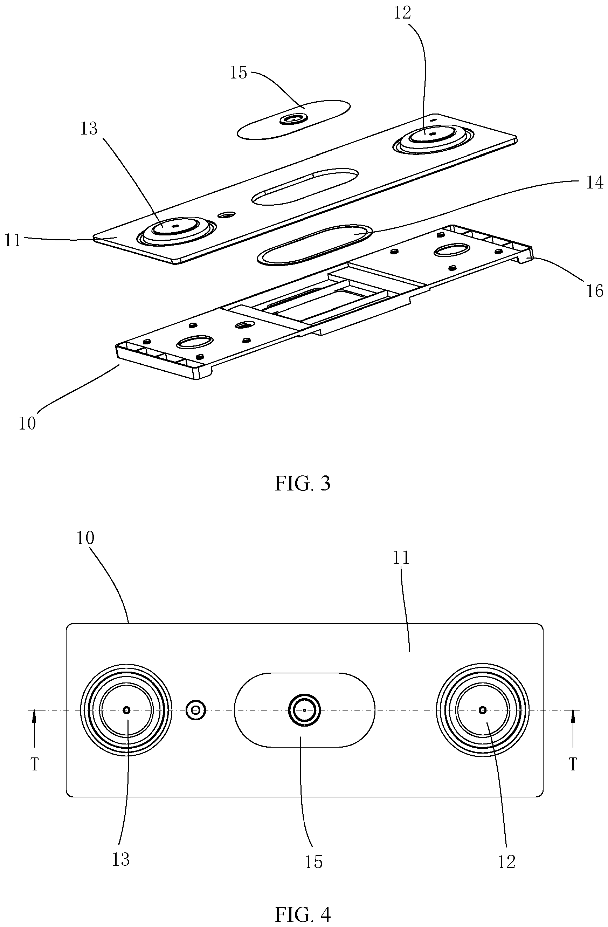

As shown in FIG. 3, the end cover assembly 10 of the embodiments of this disclosure includes an end cover 11, a first electrode terminal 12, a second electrode terminal 13, an anti-explosion valve 14, an anti-explosion valve patch 15, and an insulating plate 16. The end cover 11 is configured to fit with the housing 50, so as to package the electrode assemblies 41 and 42 in an enclosed space formed by the end cover 11 and the housing 50. The first electrode terminal 12 is a positive electrode terminal and connected to positive electrode tabs of the first cell assembly 41 and the second cell assembly 42 via the first connection piece 20. The second electrode terminal 13 is a negative electrode terminal and connected to negative electrode tabs of the first cell assembly 41 and the second cell assembly 42 via the second connection piece 30. The insulating plate 16 is arranged between the end cover 11 and the first connection piece 20 as well as the second connection piece 30 and configured to insulate the end cover 11 from the first connection piece 20 and the second connection piece 30, and the first electrode assembly 41 from the second electrode assembly 42.

As shown in FIGs. 2 to 8, the anti-explosion valve patch 15 of the battery has an exhaust hole 15A. The anti-explosion valve patch 15 includes a patch body 151 and a circular closed convex ring 152. A cross section of the closed convex ring 152 perpendicular to the extension direction of the closed convex ring is in the shape of a square with curved chamfers, and there are also curved chamfers at a joint between the square with curved chamfers and the patch body 151. As sown in FIGs. 3 to 8, there are also curved chamfers between a top wall and an outer side wall of the closed convex ring 152, between the top wall and an inner side wall, between the outer side wall and the patch body 151, and between the inner side wall and the patch body 151, and multiple closed contour lines are separately formed on the inner side and outer side of the top of the closed convex ring 152. All the closed contour lines are circular. The closed convex ring 152 is disposed on the patch body 151 and protrudes from a surface of the patch body 151 to a same side. One circular exhaust hole 15A is located in a region enclosed by the closed convex ring 152. The closed convex ring 152 and the patch body 151 are integrally formed from a same sheet material by hot pressing. The anti-explosion valve patch 15 is made of a PP material with a thickness of 0.2 mm.

The patch body 151 in this embodiment is in the shape of a long circle, and the exhaust hole 15A and the closed convex ring 152 are arranged concentrically and located in the center of the long circle. However, the shape of the patch body 151 and the positions of the exhaust hole 15A and the closed convex ring 152 are not limited thereto, but can be arranged based on requirements. The exhaust hole 15A may be alternatively disposed in the closed convex ring 152. For example, it may be disposed in a top wall of the closed convex ring 152 away from the patch body 151 or in an inner side wall of the closed convex ring 152.

The closed convex ring 152 exceeds the patch body 151 by a height of, for example, 0.5 mm, the shape and quantity of the exhaust hole 15A may be set based on requirements, and the diameter of the exhaust hole 15A is, for example, 0.3 mm.

As shown in FIGs. 7 and 8, in the anti-explosion valve patch 15 of some embodiments, the anti-explosion valve patch 15 further includes a reinforcing rib 153 close to the closed convex ring 152 for reinforcing strength of the closed convex ring 152, where the reinforcing rib 153 is disposed on the patch body 151, protruding from the surface of the patch body 151.

In the embodiment shown in FIG. 7, the reinforcing rib 153 includes four reinforcing rib segments distributed radially in a region enclosed by the closed convex ring 152. The exhaust hole 15A avoids all the reinforcing rib segments. The reinforcing rib segments are the above-mentioned internal reinforcing rib segment, straight reinforcing rib segment extending along a straight line, same-side reinforcing rib segment in the same direction as the closed convex ring 152 protruding from the surface of the patch body 151, and the spaced reinforcing rib segment spaced apart from the closed convex ring 152.

In the embodiment shown in FIG. 8, the reinforcing rib 153 includes one annular reinforcing rib segment in a region enclosed by the closed convex ring 152. The exhaust hole 15A avoids the reinforcing rib segment. This reinforcing rib segment is the above-mentioned internal reinforcing rib segment, curved reinforcing rib segment extending along a curve, same-side reinforcing rib segment in the same direction as the closed convex ring 152 protruding from the surface of the patch body 151, or the spaced reinforcing rib segment spaced apart from the closed convex ring 152.

Finally, it should be noted that the foregoing embodiments are merely intended to describe the technical solutions of this disclosure, but not intended to constitute any limitation. Although this disclosure is described in detail with reference to preferred embodiments, persons of ordinary skill in the art should understand that modifications can be made to the embodiments of this disclosure or equivalent replacements may be made to some technical features. All such modifications or replacements shall fall within the scope of the technical solutions claimed in this disclosure.

## Claims

1. An anti-explosion valve patch (15) for battery, having an exhaust hole (15A), wherein the anti-explosion valve patch (15) comprises:
a patch body (151); and
a closed convex ring (152) disposed on the patch body (151), protruding from a surface of the patch body (151) to a same side, wherein the exhaust hole (15A) is located on the closed convex ring (152) or in a region enclosed by the closed convex ring (152).

2. The anti-explosion valve patch (15) according to claim 1, wherein the closed convex ring (152) and the patch body (151) are integrally processed from a same sheet material.

3. The anti-explosion valve patch (15) according to claim 1 or 2, wherein a projection of the closed convex ring (152) on the patch body (151) comprises at least one closed contour line, each closed contour line being in a shape of a curve, a polygon, or a combination of a curve and a straight line.

4. The anti-explosion valve patch (15) according to any one of claims 1 to 3, wherein a cross section of the closed convex ring (152) perpendicular to an extension direction of the closed convex ring (152) is in a shape of a curve, a polygon, or a combination of a curve and a straight line.

5. The anti-explosion valve patch (15) according to any one of claims 1 to 4, further comprising a reinforcing rib (153) close to the closed convex ring (152) for reinforcing strength of the closed convex ring (152), wherein the reinforcing rib (153) is disposed on the patch body (151) protruding from the surface of the patch body (151).

6. The anti-explosion valve patch (15) according to claim 5, wherein the reinforcing rib (153) and the patch body (151) are integrally processed from a same sheet material.

7. The anti-explosion valve patch (15) according to claim 5 or 6, wherein the reinforcing rib (153) comprises:
an external reinforcing rib segment located outside the region enclosed by the closed convex ring (152); and/or
an internal reinforcing rib segment located in the region enclosed by the closed convex ring (152).

8. The anti-explosion valve patch (15) according to claim 7, wherein the reinforcing rib (153) comprises the internal reinforcing rib segment, wherein
the exhaust hole (15A) avoids the internal reinforcing rib segment; or
the exhaust hole (15A) is located in the internal reinforcing rib segment.

9. The anti-explosion valve patch (15) according to any one of claims 5 to 8, wherein the reinforcing rib (153) comprises:
a straight reinforcing rib segment, wherein the straight reinforcing rib segment extends along a straight line; and/or
a curved reinforcing rib segment, wherein the curved reinforcing rib segment extends along a curve.

10. The anti-explosion valve patch (15) according to any one of claims 5 to 9, wherein the reinforcing rib (153) comprises:
a same-side reinforcing rib segment in a same direction as the closed convex ring (152) protruding from the surface of the patch body (151); and/or
an opposite-side reinforcing rib segment in an opposite direction as the closed convex ring (152) protruding from the surface of the patch body (151).

11. The anti-explosion valve patch (15) according to any one of claims 5 to 10, wherein the reinforcing rib (153) comprises:
a connecting reinforcing rib segment connected to the closed convex ring (152); and/or
a spaced reinforcing rib segment spaced apart from the closed convex ring (152).

12. An end cover assembly (10), comprising:
an end plate (11);
an anti-explosion valve (14) disposed on the end plate (11); and
an anti-explosion valve patch (15), being the anti-explosion valve patch (15) according to any one of claims 1 to 11, wherein the anti-explosion valve patch (15) covers the anti-explosion valve (14), and the closed convex ring (152) of the anti-explosion valve patch (15) protrudes from the surface of the patch body (151) towards a side away from the anti-explosion valve (14).

13. A battery, comprising the end cover assembly (10) according to claim 12.

14. An electric apparatus, comprising the battery according to claim 13, wherein the battery supplies electric energy to the electric apparatus.
